# EUROPEAN PATENT SPECIFICATION

(11) **EP 0 827 845 B1**
(45) Date of publication and mention of the grant of the patent: **21.05.2003**
(21) Application number: 97113215.4
(22) Date of filing: 31.07.1997
(51) Int. Cl.: B60C 11/00, B60C 11/18

(54) **Tire having tread portion with two different rubbers to control irregular wear**
Reifen mit einer Lauffläche aus zwei verschiedenen Gummizusammensetzungen zur Steuerung der Abnutzung
Pneumatique dont la portion de la bande de roulement consiste en deux types de caoutchouc pour contrôler l'usure irrégulière

(30) Priority: 03.09.1996 US 706951
(43) Date of publication of application: 11.03.1998
(73) Proprietor: MICHELIN RECHERCHE ET TECHNIQUE S.A., CH-1763 Granges-Paccot (CH)
(72) Inventor: Radulescu, Robert Ciprian, Simpsonville, South Carolina 29681 (US)
(74) Representative: Diernaz, Christian

(56) References cited:
- EP-A- 0 529 955
- EP-A- 0 557 101
- DE-A- 1 901 448
- FR-A- 2 215 331
- US-A- 3 486 545
- US-A- 4 735 247

## Description

The present invention relates to a new and improved pneumatic vehicle tire and, more particularly, to a new and improved pneumatic tire having a radial ply carcass or having a bias ply carcass.

The present invention relates to a pneumatic vehicle tire, especially for commercial vehicles, having a radial carcass, the plies of which are made of steel or of a material of comparable high strength, and the ends of which terminate at or around the tire beads. The tire has a centrally disposed tread strip and a multi-ply belt. Typically, in such a tire, the shoulders or lateral areas of the tire tread tend to wear at a greater rate than the central portion of the tread. This necessitates the premature scrapping of such tires due to their total wear in the shoulder area although the central portion of the tread is still satisfactory for substantial additional service. The non-uniform distribution of tread wear is due in substantial measure to the severe conditions of service under which the tire must operate as well as due to the differing impact of certain forces or stresses on the tire tread across its lateral or widthwise extent.

In an attempt to overcome the drawbacks in presently known tires it has been suggested to provide a tire specifically having a rubber component of a different property to beneficially affect the tire tread performance. For example, it has been suggested that additional rubber be incorporated in the laterally outward areas of the tread so that both the central and lateral portions of the tread will wear out at approximately the same time, notwithstanding the fact that the laterally outward areas of the tread wear more quickly than the central area. This solution may, however, cause an unwanted weight increase in the shoulder region which increases the heat build-up in the tire, thereby adversely affecting tire life. Moreover, increasing the quantity of material in the shoulder regions adds to the cost of manufacture of the tire.

Another proposed solution to the problem of disproportionate tread wear is disclosed in U.S. Pat. No. 3,853,164 which teaches the use of a cushion constituted by a material which is harder than the material from which the tread is constituted disposed between the tread and the breaker of the tire, the cushion extending to one or both of the lateral or outside walls of the tire. This solution also is not completely satisfactory because the use of such a hard cushion results in a ride quality which is substantially rougher than that of conventional tires. Furthermore, it has been found that the use of such a hard cushion tends to reduce the traction of the tire.

A tire with a low-damping rubber layer disposed between plies of a multi-ply breaker belt is disclosed in U.S. Pat No. 4,671,333 to Rohde et al. Such tires have given best results when used with commercial vehicles. By providing a step in the shoulder region, and by having the belt plies extend laterally into the stepped portions, as well as by possibly introducing a low-damping rubber layer between plies of the belt, it was hoped to achieve a tire having a reduced resistance to rolling. German Auslegeschrift 10 07 644 to Fletcher discloses a vehicle tire having a belt of steel cord fabric with a resilient rubber underlayer of a carcass rubber mixture disposed radially outwardly from an eight-ply diagonal carcass of textile fabric . The belt plies extend at an angle of 45 degrees relative to the circumferential direction of the tire. The rubber underlayer serves to prevent detachment of the belt from the carcass due to the overall rigidity of the tire and the relative movement between the tread strip and the carcass resulting therefrom. The rubber underlayer is at least 2 to 5 mm thick.
A pneumatic tire disclosed in U.S. Pat. No. 3,931,844 comprises a cushion-like support under the tread member. This support is more supple or softer than the rubber mixture of the actual tread member and extends over the tire width. The support has its greatest thickness in the region of the equatorial plane of the tire and has only a relatively small thickness in the region of the tire shoulders. The disclosed tire is intended to provide uniform tire wear and improved traction.
EP-A-0 529 955, corresponding to the preamble of claim 1, discloses a tire having first rubber portion forming the outside of the tread and an internal second rubber portion (foamed rubber) to reduce the noise produced by it during the running of the tire.
EP-A-0 557 101 discloses a heavy duty tire having a belt comprising a plurality of belt plies the widths of each ply being defined to reduce the uneven wear between the tread crown and the tread shoulder is reduced.
Nonetheless, in spite of the attempts to ameliorate the problems of tire tread performance through the strategic placement of special property rubbers, there still remains room for improvement in this approach to an improved tire.

According to the present invention there is the provision of a heavy duty tire according to claim 1. Preferred features are defined in the dependent claims.

The heavy duty tire comprises a radial ply carcass defining lateral regions, two shoulder regions, and a tire axis. The tire additionally includes two side walls each covering a respective one of the lateral regions of the radial ply carcass and a belt reinforcement member extending circumferentially radially outwardly of the radial ply carcass. Further, the tire includes a tread member disposed radially outwardly of the belt reinforcement member and defining a crown region of the tire, the tread layer having a ground contacting surface forming the radially outermost surface of a body region of the tread member.

The body region includes a first rubber portion of a predetermined hardness and a second rubber portion of a hardness less than the predetermined hardness of the first rubber. The second rubber portion includes at least one rubber product having a predetermined lateral extent which is disposed relative to the first rubber such that the maximum longitudinal and lateral contact stresses on those extents of the ground contacting surface which are at least partially laterally coextensive with the at least one rubber product is no greater than the maximum longitudinal and lateral contact stresses on the extents of the ground contacting surface which are not at least partially laterally coextensive with the at least one rubber product.
- Figure 1 is a perspective view of a tire mounted on a rim, the tire being shown in an inflated and loaded condition as exists when the tire supports a vehicle on a ground surface and the arrows schematically illustrating the distribution of the forces exerted by the inflation gas on the tire during rolling contact of the tire along the ground surface ;
- Figure 2A is an enlarged perspective cross-sectional view of an angular portion of the tire shown in Figure 1 ;
- Figure 2B is an enlarged perspective view of a differential element of the tire shown in Figure 2A ;
- Figure 2C is an enlarged cross sectional view of a portion of the tire shown in Figure 2B and showing one possible configuration of the second rubber portion ;
- Figure 2D is an enlarged cross sectional view of a portion of the tire shown in Figure 2B and showing another possible configuration of the second rubber portion
- Figure 2E is an enlarged perspective view in partial section of a portion of the tire shown in Figure 2B and showing a further possible configuration of the second rubber portion ;
- Figure 3A is a graphical representation of the measured lateral contact stresses imposed on the contact length of the tire of the present invention as compared to conventional tires ; and
- Figure 3B is a graphical representation of the measured longitudinal contact stresses imposed on the contact length of the tire of the present invention as compared to conventional tires.

As used herein and in the claims, a mid circumferential plane means the plane perpendicular to the tire's axis of rotation and passing through the center of its tread. The terms "radial" and "radially" are understood to refer to directions that are perpendicular to the axis of rotation of the tire, the terms "axial" and "axially" are used herein to refer to directions that are parallel to the axis of rotation of the tire and the terms "lateral" and "laterally" are understood to refer to directions going from one sidewall of the tire towards the other sidewall of the tire. "Groove" means an elongated void area in a tread that may extend circumferentially or laterally in a straight, curved or zig-zag manner.

"Tread width" (TW) is defined as the greatest axial distance across the tread, as measured from a footprint of the tire, when the tire is mounted on a rim, subjected to a load, and inflated to a pressure selected in correspondence with the load. All of the other tire dimensions used herein and in the claims refer to a tire having been mounted on a rim and inflated to a predetermined pressure but not subject to any load. It is, however, to be understood that the invention applies to new tires and to retreaded tires as well as to tire treads in strip form which are ultimately cured before or after mounting on a tire casing.

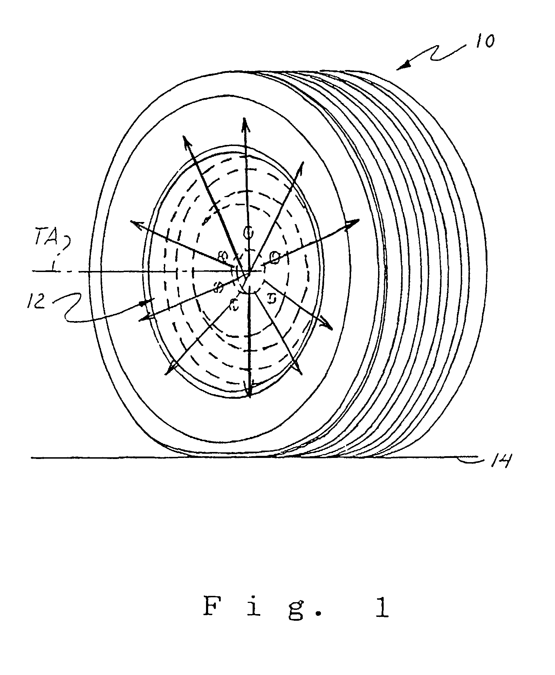

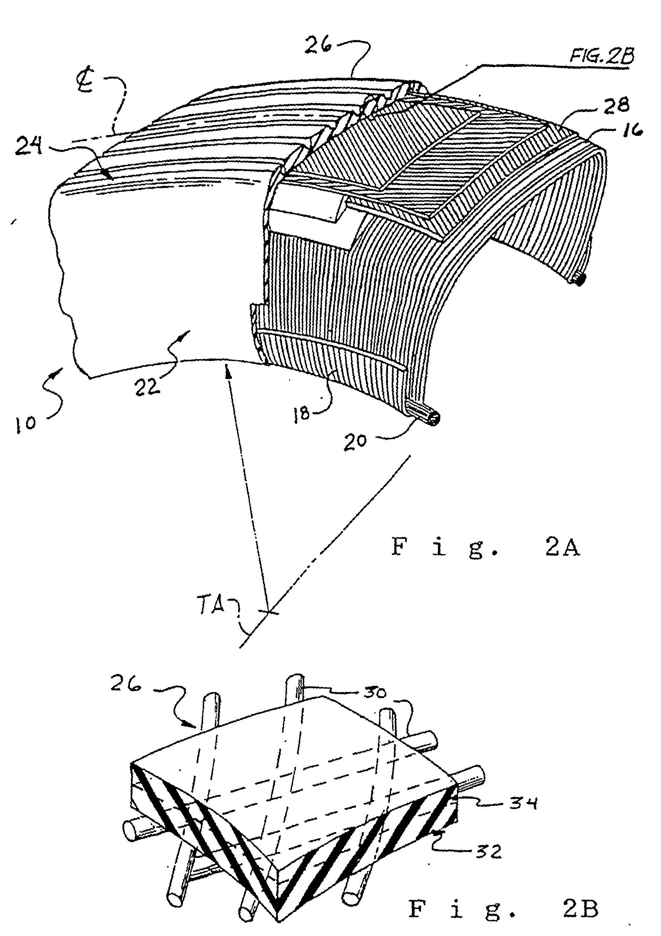

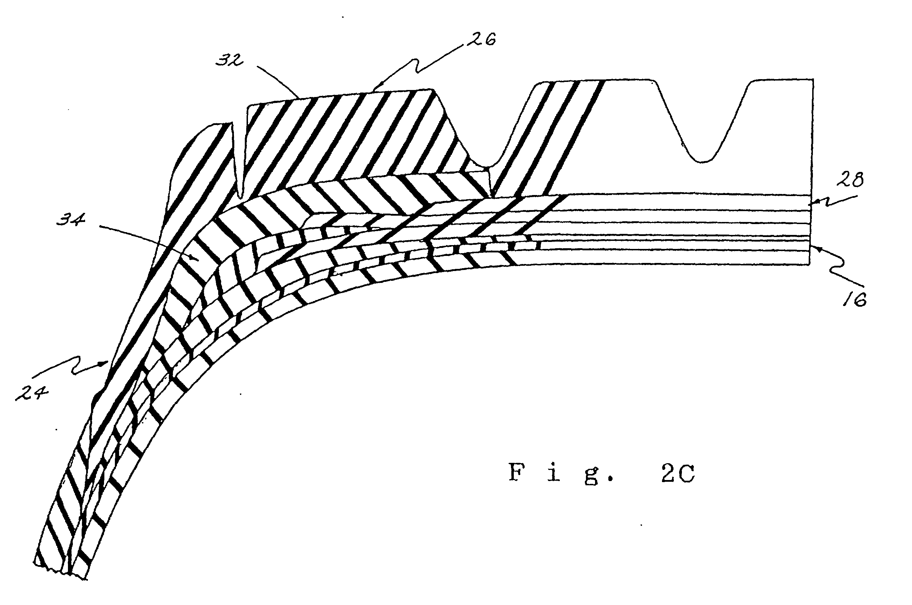

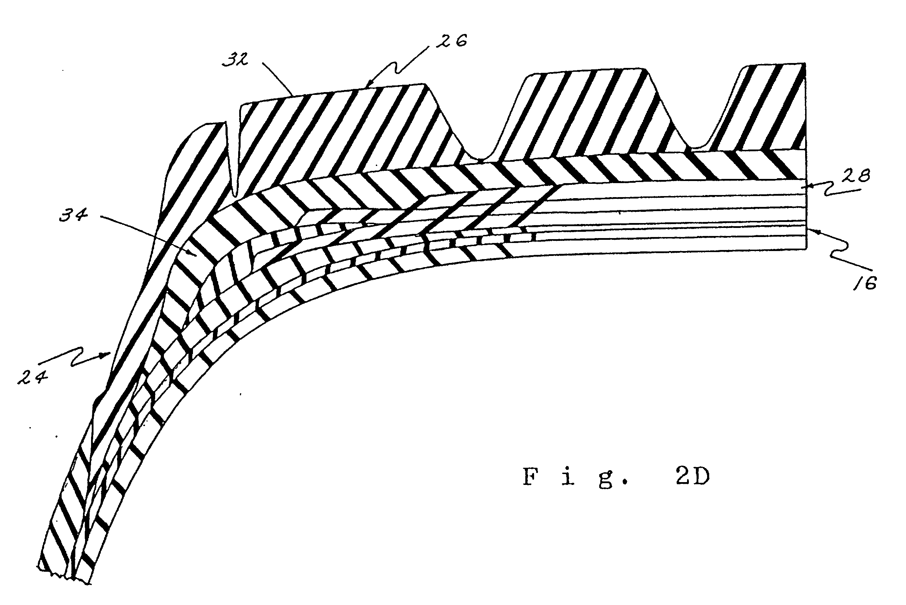

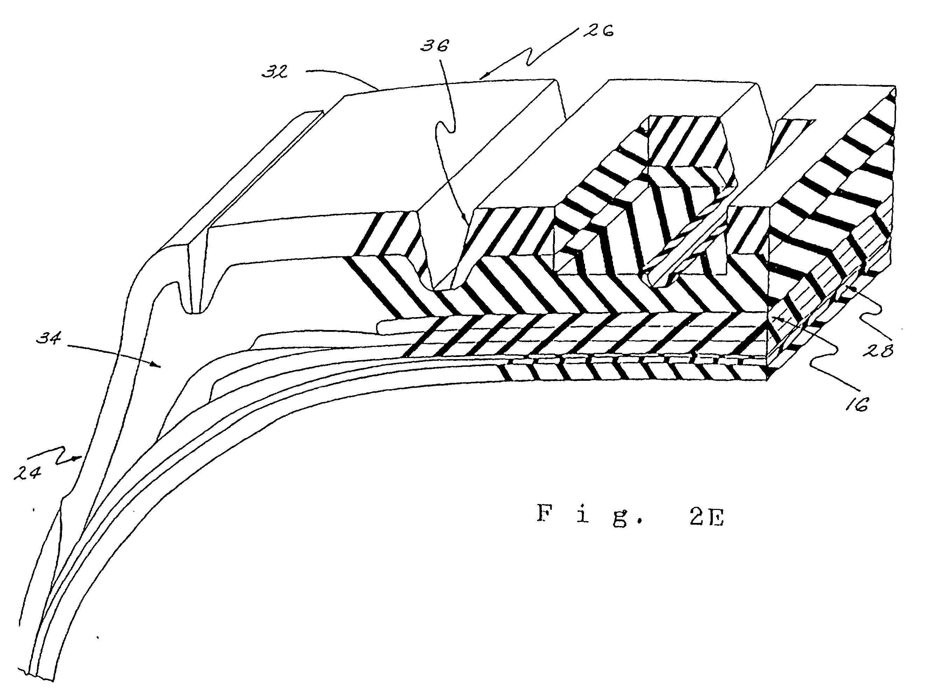

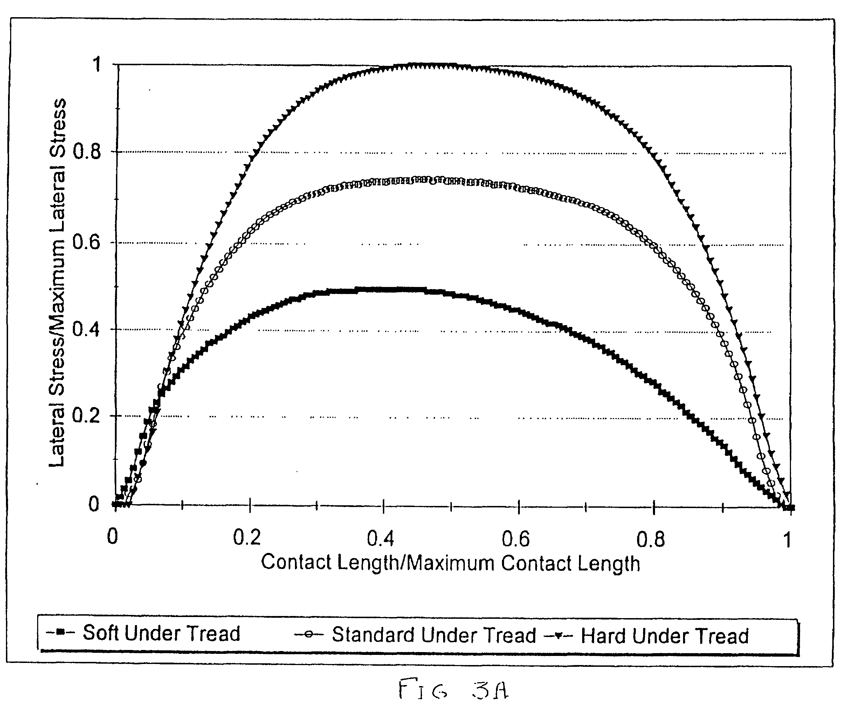

A tire 10 having improved resistance to wear and that meets and achieves all the objects of the invention set forth above will now be described with reference to Figures 1, 2A - D, and 3A and 3B. As seen in more detail in Figures 1 and 2A, the pneumatic tire 10 is adapted to be mounted on a rim 12 and comprises at least one carcass ply 16 having ends 18 each turned up around one of a pair of inextensible annular bead members 20. The bead members 20 securely mount the pneumatic tire 10 on the rim 12.

The pneumatic tire 10 additionally includes a pair of sidewall portions 22 each extending from a location adjacent a bead member 20 to a shoulder region 24 at which the sidewall portion 22 is joined with a tread portion 26. The tread portion 26 forms the portion of the pneumatic tire 10 which is in contact with the ground surface 14 during rolling movement of the tire and the tread portion 26 may include conventional tire tread sculpture features such as, for example, circumferential or lateral grooves, sipes, or lamelles. The pneumatic tire 10 also includes a plurality of circumferentially extending crown reinforcement belts or plies 28 which are disposed radially intermediate the carcass ply 16 and the tread portion 26. The belt plies 28, as seen in Figure 2A, may include a plurality of steel reinforcing cords 30 embedded in rubber or may alternatively include reinforcing cords of material other than steel.

The tread portion 26 includes a ground contacting surface forming the radially outermost surface of a body region of the tread portion. In accordance with the present invention, the body region includes a first rubber portion of a predetermined hardness and a second rubber portion of a hardness less than the predetermined hardness of the first rubber. As will be described in more detail below, the composition, geometry, and location of the first and second rubber portions relative to one another and other components of the tire are selected to achieve desirable longitudinal and lateral contact stresses in selected regions of the tire, in particular, the shoulder regions. For example, as seen in Figures 2A and 2B, the first rubber portion 32 may be comprised of the rubber which is formed on the steel reinforcing cords 30. The first rubber portion 32 may extend laterally across the entire width of the tread portion 26 and may extend radially from the belt plies 28 to the ground contacting surface of the tread portion 26.

In many tire design situations in accordance with the present invention, the benefits of the invention can best be achieved by selecting the second rubber portion to have at the most one-half the hardness of the first rubber portion. Moreover, it may be advisable to provide a third rubber portion having a hardness characteristic intermediate that of the first and second rubber portions such that the third rubber portion can function as a transition component in transmitting the stresses between the first and second rubber portions.

As seen in Figure 2C, the second rubber portion 34 may be in the form of a rubber product of a limited lateral extent disposed radially intermediate the ends of the belts plies 28 and the extent of the first rubber 32 forming the tread features of the tread portion 26. In Figure 2B, which is an enlarged view of a differential element of the tread portion 26, in one possible disposition of the first rubber portion 32 and the second rubber portion 34 to each other, the first rubber portion is adhered to the steel reinforcing cords 30 of the belt plies 28 and the second rubber portion 34 is adhered to the first rubber portion 32.

Alternatively, as seen in Figure 2D, the second rubber portion 34 may be in the form of a rubber product of a full lateral extent disposed radially intermediate the ends of the belts plies 28 and the extent of the first rubber 32 forming the tread features of the tread portion 26.

The full lateral extent of the second rubber portion 34 may, as illustrated, extend into the shoulder regions 24. In any event, the second rubber portion 34 is of a selected predetermined lateral extent and is selectively disposed relative to the first rubber portion 32 such that the maximum longitudinal and lateral contact stresses on those extents of the ground contacting surface which are at least partially laterally coextensive with the second rubber product 34 are no greater than the maximum longitudinal and lateral contact stresses on the extents of the ground contacting surface which are not at least partially laterally coextensive with the second rubber product 34.

As an additional alternative, as seen in Figure 2E, the second rubber portion 34 may be in the form of a rubber product of a full lateral extent disposed radially intermediate the ends of the belts plies 28 and the extent of the first rubber 32 forming the tread features of the tread portion 26. In this configuration, the second rubber portion 34 extends radially outwardly of the bottoms of the major circumferential grooves 36 formed in the tread portion 26. The full lateral extent of the second rubber portion 34 may, as illustrated, extend into the shoulder regions 24. In any event, the second rubber portion 34 is of a selected predetermined lateral extent and is selectively disposed relative to the first rubber portion 32 such that the maximum longitudinal and lateral contact stresses on those extents of the ground contacting surface which are at least partially laterally coextensive with the second rubber product 34 are no greater than the maximum longitudinal and lateral contact stresses on the extents of the ground contacting surface which are not at least partially laterally coextensive with the second rubber product 34.

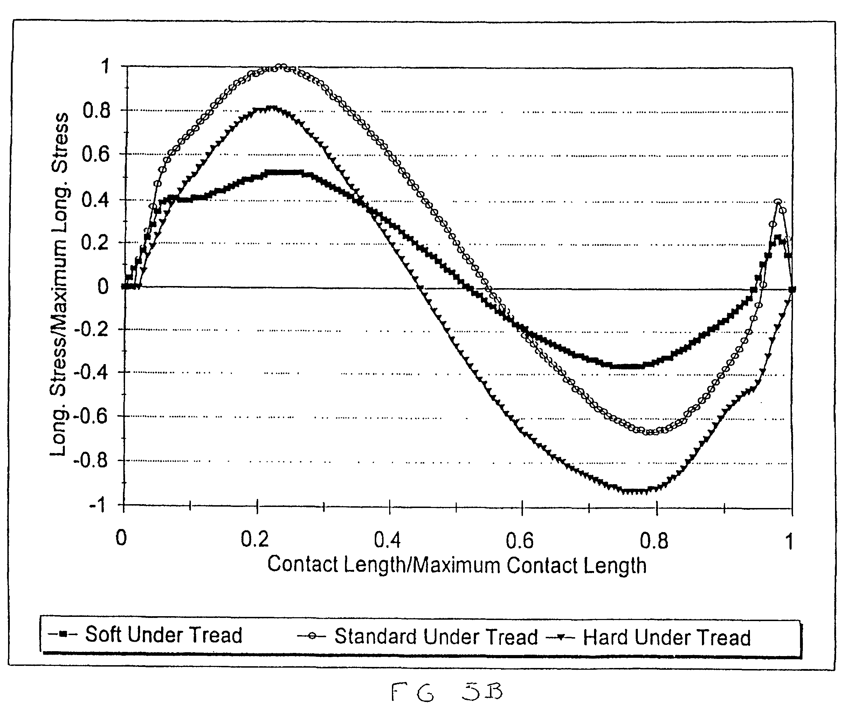

Figure 3A is a graphical representation of the measured lateral contact stress imposed across the contact length of the tread portion 26 of a tire of the present invention as compared to the lateral contact stress imposed on a tire having a conventional rubber tread portion and a tire having a relatively hard rubber tread portion. It can thus be seen that the maximum lateral contact stress for the tire of the present invention across its contact length is lower than for the comparison tires. As noted, this reduced maximum lateral contact stress leads to a reduction in the slippage of the tread on the ground, thus reducing the rate of wear of the tire.

Figure 3B is a graphical representation of the measured longitudinal contact stress imposed across the contact length of the tread portion 26 of a tire of the present invention as compared to the longitudinal contact stress imposed on a tire having a conventional rubber tread portion and a tire having a relatively hard rubber tread portion. It can thus be seen that the maximum longitudinal contact stress for the tire of the present invention across its contact length is lower than for the comparison tires.

The second rubber portion 34 can be produced in a conventional manner by extrusion or calendering. To simplify build-up of the tire, the second rubber portion 34 can be preassembled or complexed with the first rubber portion 32 prior to the building of the tire. The inventive tire construction described above is particularly suitable for tires for commercial vehicles, such as trucks and buses, where the tires have a relatively low height-to-width ratio, i.e. where the ratio of the height H of the tire to the width B of the tire is 0.9 and less.

The present invention exploits the heretofore unrecognized relationship between the maximum longitudinal and lateral contact stresses imposed on the tire and the wear of the tire to provide a tire with improved wear endurance. It is understood that the invention has a scope sufficient to include the full range of values of the maximum longitudinal and lateral contact stresses to the extent that the wear improvement potential of the invention is achieved. Thus, the invention covers those tire design situations in which the geometry, composition, and location of the reduced rigidity rubber portion is selected to only slightly reduce the maximum longitudinal contact stresses while relatively significantly reducing the maximum lateral contact stresses. Conversely, the invention covers those tire design situations in which the geometry, composition, and location of the reduced rigidity rubber portion is selected to only slightly reduce the maximum lateral contact stresses while relatively significantly reducing the maximum longitudinal contact stresses. In any event, it is to be understood that the reductions in the maximum longitudinal and lateral contact stresses are optimally selected in coordination with the impact of the reduced rigidity rubber portion on the handling and rolling resistance characteristics of the tire. Additionally, it will often be prudent to take into account the impact of the reduced rigidity rubber portion on the manufacturing complexity of the tire.

## Claims

1. A heavy duty tire (10) having a tread portion with two different rubbers to control irregular wear, comprising, a pair of beads (20), a radial carcass ply (16) having ends, each of said ends turned up around a respective one of said beads, at least one belt ply (28) extending circumferentially around the tire and disposed radially outward of said carcass ply, and a tread portion (26) extending radially outward from said at least one belt ply (28) having a plurality of tread ribs and at least one groove formed therein, said tread portion (26) including a first rubber portion (32) forming a ground contacting portion and a second rubber portion (34) forming a non-ground contacting portion disposed between the first rubber portion and the at least one belt ply (28) in each shoulder area of the tread portion, **characterized in that** the second rubber portion (34) has a hardness value at the most one-half the hardness value of the first rubber portion (32).

2. A heavy duty tire (10) according to claim 1 wherein the second rubber portion (34) is in the form of a rubber product of a limited lateral extent disposed radially intermediate the ends of the belts plies (28) and the extent of the first rubber portion (32).

3. A heavy duty tire (10) according to claim 1 or to claim 2 wherein a third rubber portion is provided between the first rubber portion (32) and the second rubber portion (34), said third rubber portion having a hardness value less thatn the hardness value of the first rubber portion (32) and greater than the hardness value of the second rubber portion (34).

## Patentansprüche

1. Reifen (10) für den schweren Einsatz, mit einem Laufflächenabschnitt mit zwei unterschiedlichen Gummis, um die unregelmäßige Abnutzung zu kontrollieren, der ein Paar Wülste (20), eine Radialkarkassenlage (16) mit Enden, wobei jedes der genannten Enden nach oben um einen entsprechenden der genannten Wülste herumgeschlagen ist, mindestens eine Gürtellage (28), die sich in Umfangsrichtung rund um den Reifen erstreckt und radial außerhalb der genannten Karkassenlage angeordnet ist, und einen Laufflächenabschnitt (26) aufweist, der sich radial außerhalb der genannten, mindestens einen Gürtellage (28) erstreckt und eine Vielzahl von Laufflächenrippen sowie mindestens eine, hierin ausgebildete Rille aufweist, wobei der genannte Laufflächenabschnitt (26) einen ersten Gummiabschnitt (32) umfaßt, der einen den Boden berührenden Abschnitt bildet, und einen zweiten Gummiabschnitt (34), der einen nicht den Boden berührenden Abschnitt bildet und zwischen dem ersten Gummiabschnitt und der mindestens einen Karkassenlage (28) in jeder Schulterzone des Laufflächenabschnitts angeordnet ist, **dadurch gekennzeichnet, daß** der zweite Gummiabschnitt (34) einen Wert der Härte hat, der höchstenfalls eine Hälfte des Wertes der Härte des ersten Gummiabschnitts (32) ist.

2. Reifen (10) für den schweren Einsatz nach Anspruch 1, worin der zweite Gummiabschnitt (34) in Form eines Gummiproduktes von begrenzter seitlicher Erstreckung vorliegt und radial mitten zwischen den Enden der Gürtellagen (28) und der Erstreckung des ersten Gummiabschnitts (32) angeordnet ist.

3. Reifen (10) für den schweren Einsatz nach Anspruch 1 oder Anspruch 2, worin ein dritter Gummiabschnitt zwischen dem ersten Gummiabschnitt (32) und dem zweiten Gummiabschnitt (34) vorgesehen ist, wobei der genannte dritte Gummiabschnitt einen Wert der Härte hat, der geringer ist als der Wert der Härte des ersten Gummiabschnitts (32) und grösser als der Wert der Härte des zweiten Gummiabschnitts (34).

## Revendications

1. Pneu poids lourd (10) ayant une bande de roulement avec deux caoutchoucs différents pour contrôler une usure irrégulière, comprenant, une paire de tringles (20), une carcasse radiale (16) ayant des extrémités, chacune desdites extrémités retournées autour d'une tringle dand chaque bourrelet, au moins une nappe de ceinture (28) s'étendant de manière circonférentielle autour du pneu et disposée radialement à l'extérieur de ladite nappe de carcasse, et une bande de roulement (26) s'étendant radialement à l'extérieur de ladite au moins une nappe de ceinture (28) ayant une pluralité de nervures de bande de roulement et au moins une rainure formée dans celle-ci, ladite bande de roulement (26) comprenant une première partie en caoutchouc (32) formant une partie de contact au sol, et une deuxième partie en caoutchouc (34) formant une partie sans contact au sol, disposée entre la première partie en caoutchouc et la au moins une nappe de ceinture (28) dans chaque zone d'épaulement de la partie de bande de roulement, **caractérisé en ce que** la deuxième partie en caoutchouc (34) a une valeur de dureté au plus égale à la moitié de la valeur de dureté de la première partie en caoutchouc (32).

2. Pneu poids lourd (10) selon la revendication 1, dans lequel la deuxième partie en caoutchouc (34) est sous forme d'un produit en caoutchouc d'une étendue latérale limitée, disposé radialement entre les extrémités des nappes de ceinture (28) et la première partie en caoutchouc (32).

3. Pneu poids lourd (10) selon la revendication 1 ou la revendication 2, dans lequel une troisième partie en caoutchouc est prévue entre la première partie en caoutchouc (32) et la deuxième partie en caoutchouc (34), ladite troisième partie en caoutchouc ayant une valeur de dureté plus faible que la valeur de dureté de la première partie en caoutchouc (32) et plus élevée que la valeur de dureté de la deuxième partie en caoutchouc (34).
